# FASCICULE DE BREVET EUROPEEN

(11) **EP 0 478 804 B1**
(45) Date de publication et mention de la délivrance du brevet: **29.03.1995**
(21) Numéro de dépôt: 89420463.5
(22) Date de dépôt: 23.11.1989
(51) Int. Cl.: G11B 23/023

(54) **Boîte pour l'emballage de cassettes audiovisuelles ou analogues**
Verpackungsbehälter für audio-visuelle Kassetten oder DGL
Packaging box for audiovisual cassette or the like

(43) Date de publication de la demande: 08.04.1992
(73) Titulaire: Corjet, Denis, F-69870 Poule les Echarmeaux (Rhone) (FR)
(72) Inventeur: Corjet, Denis, F-69870 Poule les Echarmeaux (Rhone) (FR)
(74) Mandataire: Arbousse-Bastide, Jean-Claude Philippe

(56) Documents cités:
- EP-A- 0 109 092
- EP-A- 0 284 458
- WO-A-82/02532
- GB-A- 2 022 555
- US-A- 4 505 404
- US-A- 4 641 750
- US-A- 4 753 347

## Description

La présente invention est relative à une boîte d'embalage prévue pour recevoir des contenus divers, mais plus particulièrement des cassettes audio-visuelles. Cela concerne notamment les cassettes vidéo du genre de celles qu'on utilise dans un magnétoscope. Il peut également s'agir d'un boîtage pour des objets concernant :
- la photo;
- des cassettes musicales ou sonores;
- des cassettes vidéo;
- la pharmacie;
- les cosmétiques;
- les parfums.

On sait qu'une boîte de ce genre comporte généralement deux éléments principaux, à savoir :
- une feuille de matière thermoplastiques souple conformée pour définir deux demi-coques séparées par une bande dorsale, et susceptibles de s'emboîter l'une sur l'autre lorsqu'on replie la feuille de part et d'autre de la bande dorsale;
- une bande de carton, collée sur la face dorsale de la feuille thermoformée.

On place la cassette entre les deux demi-coques emboîtées l'une sur l'autre, si bien que la boîte d'emballage se présente désormais sous un aspect analogue à celui d'un livre dont le dos et les deux couvertures sont revêtus de la feuille de carton qui reste visible dans son ensemble. On comprend que la feuille de revêtement en carton peut être imprimée ou décorée à volonté pour offrir au regard un aspect à la fois ornemental et utilitaire. En particulier y figurent généralement les indications nécessaires à l'identification de la cassette.

Pour la fabrication, la feuille de carton et la feuille thermoformée sont préparées séparément, puis collées ou soudées à plat l'une contre l'autre. Ensuite, lorsqu'on replie les deux demi-coques l'une sur l'autre de part et d'autre de la bande dorsale, le pliage s'effectue suivant au moins deux lignes de pliage disposées de part et d'autre, le long de la bande dorsale.

Sur chacune de ces lignes de pliage se pose alors le problème du glissement relatif du carton et de la matière plastique, compte tenu de l'épaisseur de chacune des deux feuilles superposées.

Diverses solutions ont été proposées pour résoudre ce problème. Par exemple, le brevet français 2 611 654 (qui correspond au document européen EP-A-0 284 458) prévoit de pratiquer, sur la feuille de carton, le long de chaque ligne de pliage, un refoulage faisant saillie vers l'extérieur, sur le dos de la feuille de carton. Cette technique présente un inconvénient certain en ce qui concerne la difficulté de fabrication et un prix de revient relativement élevé. En effet, pour assembler les deux feuilles, il est alors nécessaire d'éviter tout encollage de la face interne des refoulages de la feuille en carton. Ainsi, on est obligé de pratiquer une enduction sélective sur la face interne de la feuille de carton, certaines zones étant encollées, d'autres pas.

La présente invention a pour but de réaliser suivant une technique différente, une boîte d'emballage ne présentant pas les inconvénients précités. Des boîtes comportant des motifs compressibles sur une ligne de pliage sont connues des documents GB-A-2022555 et US-A-4 641 750, mais ces motifs ne sont pas formés aux extrémités de la ligne de pliage.

Une boîte d'emballage selon l'invention est définie dans la revendication 1.

Ainsi, lorsqu'on referme la boîte complète, le carton se plie normalement, sans possibilité d'extension, alors qu'au-dessous, la feuille thermoplastique se déforme :
- aux extrémités de la ligne de pliage : par rapprochement des bords des encoches :
- dans la partie centrale restante de la ligne de pliage : par rapprochement des rives des motifs compressibles.

Il en résulte un aspect décoratif agréable, cependant que la fabrication a été notablement simplifiée avec réduction du prix de revient.

Suivant un mode de réalisation possible de l'invention, chaque motif compressible est constitué par une encoche découpée dans le bord de la feuille thermoplastique, sous la ligne de pliage du carton et le long de la partie intéressé de celle-ci.

Suivant une autre réalisation possible de l'invention, chaque motif compressible est constitué par au moins une ondulation formée en relief sur la face interne de la feuille thermoplastique sous la ligne de pliage du carton, et le long de la partie intéressée de celle-ci.

Le dessin annexé, donné à titre d'exemple non limitatif, permettra de mieux comprendre les caractéristiques de l'invention, et les avantages qu'elle est susceptible de procurer.

Figure 1 est une vue en plan d'une boîte d'emballage selon l'invention, telle qu'elle est fabriquée à plat, les motifs compressibles étant constitués par des encoches.

Figure 2 en est une coupe suivant II-II (figure 1).

Figure 3 est une coupe analogue à la figure 2, après repliage et fermeture de la boîte.

Figure 4 est une vue extérieure de la boîte fermée, pouvant contenir une cassette vidéo.

Figure 5 montre, à grande échelle, un détail de la boîte ouverte, en coupe suivant II-II (figure 1).

Figures 6 et 7 montrent, à grande échelle, les détails correspondants de la boîte fermée, en coupe respectivement suivant II-II, et VII-VII (figure 1).

Figure 8 correspond à la figure 1 dans le cas où les motifs compressibles sont constitués par des ondulations de la feuille thermoplastique.

Figure 9 est une coupe suivant IX-IX (figure 8).

Figure 10 est une vue éclatée montrant à grande échelle le détail d'un motif compressible de la feuille thermoplastique, lorsqu'on le présente sur la feuille de carton en vue de leur assemblage.

La boîte à cassettes vidéo illustrée sur les dessins est formée par contre-collage d'une feuille de carton 1 et d'une feuille souple 2 en matière plastique thermoformée.

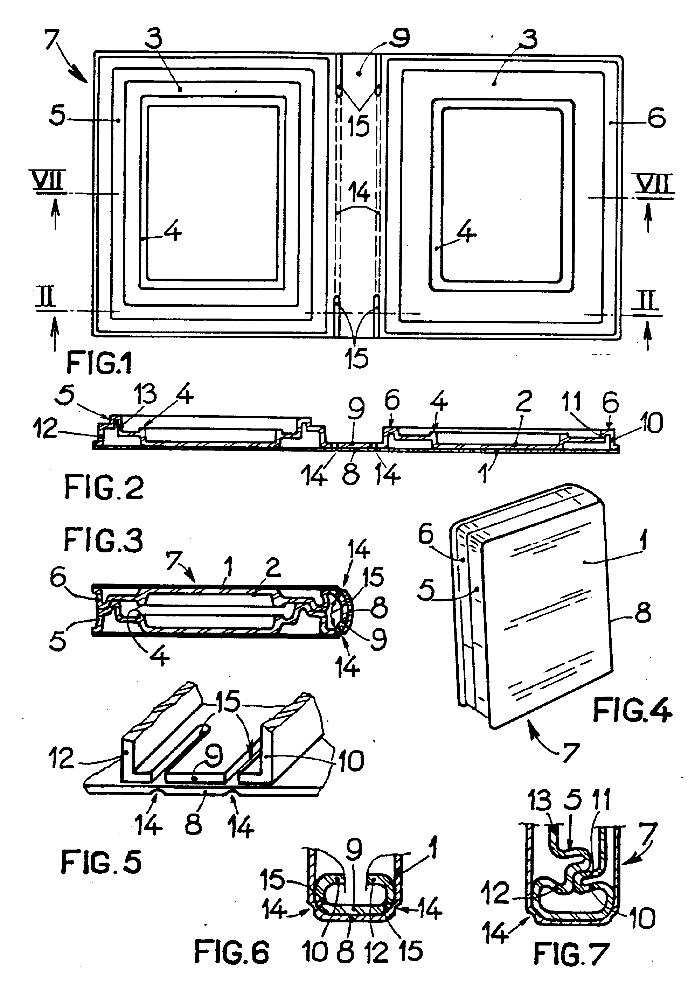

La feuille thermoformée 2 définit deux demi-coques 3 que limitent des nervures périphériques 4. Elles mêmes sont entourées à la manière connue, l'une par un profil de clipsage mâle 5, l'autre par le profil femelle 6 correspondant. Ces deux profils viennent s'encastrer l'un dans l'autre, pour verrouiller l'ensemble de la boîte 7 lorsque celle-ci est en position repliée de fermeture (figures 3, 4, 6 et 7).

Entre les deux demi-coques 3, se trouvent définies :
- sur la feuille de carton 1, une bande 8 formant le dos du livre auquel ressemble la boîte 7 quand elle est fermée;
- sur la feuille thermoplastique 2, une bande 9 formant la doublure interne du dos du pseudo-livre.

Le profil 6 est défini par deux rives 10 et 11 qui sont parallèles quand l'ensemble est ouvert au repos (figures 1, 2 et 5). De même, le profil 5 est défini par deux rives 12 et 13, parallèles quand la boîte est ouverte.

Selon l'invention, le pliage réalisé de chaque côté du dos 8, 9, pour refermer la boîte est défini par au moins une ligne 14 refoulée en creux sur toute la longueur de la face extérieure de la feuille de carton 1, tandis que, sous chaque extrémité de chaque ligne 14, est découpée dans la feuille thermoplastique 2, une encoche longitudinale 15. La longueur de chaque encoche 15 est de l'ordre du centimètre, tandis que sa largeur est de l'ordre d'un à deux millimètres.

On voit que, lorsqu'on referme la boîte 7 (figures 3, 4, 6 et 7), la doublure 9 du dos se plie, tout en restant incompressible. Pour compenser l'effet dû à l'épaisseur des deux feuilles 1, 2 assemblées par collage, on constate ceci :
- aux extrémités des lignes de pliage 14, la compensation s'effectue par resserrement des encoches 15 de la feuille 2 qui constituent alors des motifs compressibles : les deux bords longitudinaux de chaque encoche se rapprochent, comme cela apparaît sur les figures 3 et 6;
- dans la partie centrale des lignes de pliage 14, la compensation s'effectue par resserrement de chaque profil 5,6, dont les rives, respectivement 12, 13 et 10, 11, deviennent convergentes vers l'extérieur de la boîte 7 (figure 7).

L'avantage de ce dispositif est de faciliter la fabrication de la boîte et d'en réduire le coût, puisque les surfaces à assembler des feuilles 1 et 2 peuvent être encollées dans leur ensemble, sans avoir à se préoccuper d'épargner certaines zones.

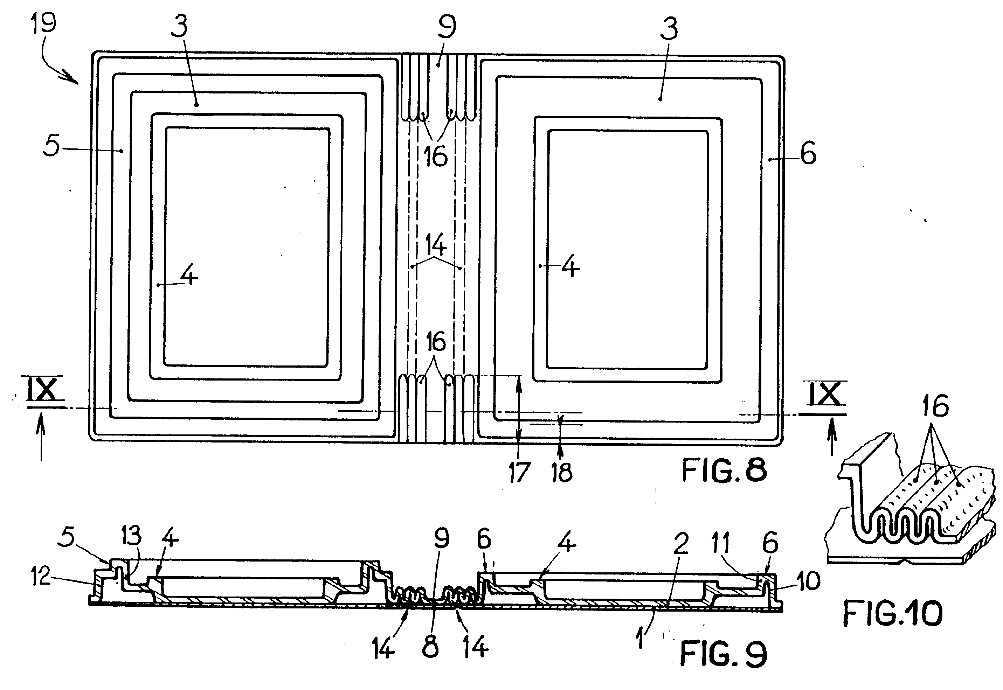

Dans le cas de la variante des figures 8 à 10, chaque motif compressible est constitué par plusieurs ondulations 16 formées côte-à-côte en relief sur la face interne de la feuille thermoplastique. Chaque jeu d'ondulations 16 constitue sur la longueur 17, une sorte de soufflet compressible logé sous la ligne de pliage 14 du carton. En particulier, on voit que cette longueur 17 est supérieure à la longueur marginale 18 le long de laquelle aucune compression de la feuille thermoplastique dans le sens transversal des flèches 19 ne peut être obtenue par resserrement des rives en relief 12, 13 et 10, 11 (figure 8).

## Revendications

1. Boîte d'emballage (7), obtenue par collage à plat d'une feuille de carton (1) contre une feuille thermoplastique souple (2) définissant deux demi-coques (4) de part et d'autre d'une bande centrale de dos (8), (9), alors que le pliage de l'ensemble s'effectue entre chaque demi-coque (4) et le dos (8), (9), et que chaque ligne de pliage est définie par au moins une ligne de refoulage (14), pratiquée sur la feuille de carton (1), caractérisée en ce que le feuille de carton est encollée sur la totalité de la surface de sa face intérieure collée à la feuille thermoplastique (2) alors que les parties de la feuille thermoplastique situées près du bord de cette dernière au niveau des lignes de pliage forment chacune un motif compressible (15,16), et que la partie centrale de la feuille thermoplastique au niveau des lignes de pliage ne forme pas de tels motifs compressibles.

2. Boîte d'emballage suivant la revendication 1, caractérisée en ce que deux lignes (14) sont refoulées en creux de chaque côté du dos (8), (9).

3. Boîte d'emballage suivant l'une quelconque des revendications 1 et 2 , caractérisée en ce que chaque motif compressible est constitué par une encoche longitudinale (15) découpée dans le bord de la feuille thermoplastique (2), au niveau de la ligne de pliage (14) du carton et le long de la partie intéressée de celle-ci.

4. Boîte d'emballage suivant la revendication 3, caractérisée en ce qu'en position fermée, elle présente la structure suivante :
- les deux bords de chaque encoche (15) sont resserrés;
- entre les encoches (15), le long de chaque ligne (14), les rives (12), (13) et (10), (11) de deux profils d'encliquetage (5), (6) sont resserrés en convergeant vers l'extérieur de la boîte.

5. Boîte d'emballage suivant l'une quelconque des revendications 1 et 2, caractérisée en ce que chaque motif compressible est constitué par au moins une ondulation (16) formée en relief sur la face interne de la feuille thermoplastique (2) au niveau de la ligne de pliage (14) du carton est suivant une longueur (16).

6. Boîte d'emballage suivant la revendication 5, caractérisée en ce que chaque motif compressible comprend plusieurs ondulations (16) placées côte-à-côte.

7. Boîte d'emballage suivant l'une quelconque des revendications 5 et 6, caractérisée en ce qu'en position fermée, elle présente la structure suivante :
- les deux bords de chaque motif ondulé (16) sont resserrés (flèche (19));
- entre les motifs (16), le long de chaque ligne (14), les rives (12), (13) et (10), (11) de deux profils d'encliquetage (5), (6) sont resserrés en convergeant vers l'extérieur de la boîte.

## Patentansprüche

1. Verpackungsbehälter, erhalten durch Flachverleimung eines Kartonblatts (1) gegen ein flexibles Kunststoffblatt (2), welches einerseits zwei Halbschalen (4) und andererseits einen zentralen Rückenstreifen (8), (9) definiert, wobei das Zusammenfalten der Baueinheit zwischen jeder Halbschale (4) und dem Rücken (8), (9) bewirkt wird und jede Faltlinie definiert ist durch mindestens eine auf dem Kartonblatt angebrachte Prägelinie, **dadurch gekennzeichnet,** daß das Kartonblatt über die Gesamtheit der Oberfläche seiner mit dem Kunststoffblatt (2) verklebten Innenseite mit Leim bestrichen ist, als auch daß die Teile des Kunststoffblatts, welche nahe dem Rand des letzteren angeordnet sind, in Höhe der Faltlinien jeweils ein zusammendrückbares Muster (15, 16) bilden und daß der Zentralteil des Kunststoffblatts in Höhe der Faltlinien solche zusammendrückbaren Muster nicht aufweist.

2. Verpackungsbehälter nach Anspruch 1, **dadurch gekennzeichnet**, daß die beiden Linien (14) vertieft an jeder Seite des Rückens (8), (9) geprägt sind.

3. Verpackungsbehälter nach einem der Ansprüche 1 und 2, **dadurch gekennzeichnet**, daß jedes zusammendrückbare Muster durch eine längsverlaufende Aussparung (15) gebildet wird, welche am Rand des Kunststoffblatts in Höhe der Faltlinie (14) des Kartons und längs des dort interessierenden Bereichs ausgestanzt ist.

4. Verpackungsbehälter nach Anspruch 3, **dadurch gekennzeichnet**, daß er in der geschlossenen Stellung folgenden Aufbau aufweist:
- die beiden Ränder jeder Aussparung (15) verlaufen eng beieinander;
- zwischen den Aussparungen (15) längs jeder Linie (14) verlaufen die Ränder (12), (13) und (10), (11) der beiden Rastprofile (5, 6) in Richtung der Außenseite des Behälters konvergierend eng aneinander.

5. Verpackungsbehälter nach einem der Ansprüche 1 und 2, **dadurch gekennzeichnet**, daß jedes zusammendrückbare Muster durch mindestens eine Wellung (16) gebildet wird, welche auf der Innenseite des Kunststoffblatts (2) in Höhe der Faltlinie (14) des Kartons und einer Länge (16) folgend reliefförmig gebildet ist.

6. Verpackungsbehälter nach Anspruch 5, **dadurch gekennzeichnet**, daß jedes zusammendrückbare Muster aus mehreren nebeneinander angeordneten Wellungen (16) besteht.

7. Verpackungsbehälter nach einem der Ansprüche 5 und 6, **dadurch gekennzeichnet**, daß er im geschlossenen Zustand den nachfolgenden Aufbau aufweist:
- die Ränder jedes zusammendrückbaren Musters (16) verlaufen eng beieinander (Pfeil (19));
- zwischen den Mustern (16) längs jeder Linie (14) verlaufen die Ränder (12), (13) und (10), (11) der beiden Rastprofile (5), (6) in Richtung der Außenseite des Behälters konvergierend eng aneinander.

## Claims

1. Packaging box (7) obtained by the sticking flat of a cardboard sheet (1) against a flexible thermoplastic sheet (2) defining two half shells (4) on both sides of a central back strip (8, 9) wherein the bending of file assembly takes place between each half shell (4) and the back (8, 9) and each line of bending is defined by at least a line of folding (14) formed on the sheet of cardboard (1) characterised in that the sheet of cardboard is pasted over the whole of the surface of its interior face, stuck to the thermoplastic sheet (2) wherein the parts of the thermoplastic sheet located near the edge of this latter at the level of the lines of bending each form a compressible design (15, 16) and the central part of the thermoplastic sheet at the level of the lines of bending does not form such a compressible design.

2. Packaging box according to claim 1 characterised in that the two lines (14) are folded by grooves on either side of the back (8, 9).

3. Packaging box according to either one of claims 1 and 2 characterised in that each compressible design is comprised of a longitudinal notch (15) indented on the edge of the thermoplastic sheet (2) at the level of the line of bending (14) of the cardboard and along the part concerned of this.

4. Packaging box according to claim 3 characterised in that in the closed position it has the following structure:
- the two edges of each notch (15) are compressed;
- between the notches (15) along each line (14), the lips (12, 13 and 10, 11) of two ratchet profiles (5, 6) are compressed in convergence around the exterior of the box.

5. Packaging box according to either one of claims 1 and 2 characterised in that each compressible design is comprised of at least an undulation (16) formed in relief on the internal face of the thermoplastic sheet (2) at the level of the line of bending (14) of the cardboard and following a length (16).

6. Packaging box according to claim 5 characterised in that each compressible design consists of several undulations (16) placed side by side.

7. Packaging box according to either one of claims 5 and 6 characterised in that in the closed position it presents the following structure:
- the two edges of each undulated design (16) are compressed (arrow 19);
- between the designs (16), along each line (14), the lips (12, 13 and 10, 11) of the two ratchet profiles (5, 6) are compressed in convergence around the exterior of the box.
